(19) Europäisches Patentamt
European Patent Office
Office européen des brevets

(11) EP 4 390 813 A1

(12) EUROPEAN PATENT APPLICATION

(43) Date of publication:
26.06.2024 Bulletin 2024/26

(21) Application number: 22306975.8

(22) Date of filing: 21.12.2022

(51) International Patent Classification (IPC):
G06Q 10/20 (2023.01)    G06Q 50/06 (2024.01)
G06Q 10/04 (2023.01)

(52) Cooperative Patent Classification (CPC):
G06Q 10/20; G06Q 10/04; G06Q 50/06

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: TotalEnergies OneTech
92400 Courbevoie (FR)

(72) Inventors:
• ESTECAHANDY, Maider
92400 COURBEVOIE (FR)
• ENEAU, Cédric
92400 COURBEVOIE (FR)
• CLEMENT, Guillaume
92400 COURBEVOIE (FR)

(74) Representative: Lavoix
2, place d'Estienne d'Orves
75441 Paris Cedex 09 (FR)

(54) A METHOD FOR DETERMINING THE PRODUCTION BASED AVAILABILITY OF A WIND FARM

(57) The present invention relates to a method for determining the production based availability of a wind farm (10), the method comprising:
- determining time series comprising at least an expected production for each wind turbine and a total expected production for the whole wind farm (10) at each timestep of a given time period, the expected productions taking into account systematic losses relative to each wind turbine,
- determining a total delivered production for the whole windfarm on the basis of the expected production of each wind turbine at each timestep and of a determined availability of each wind turbine at each timestep of the time series, and
- determining the production based availability of the whole wind farm (10) at each timestep on the basis of the total expected production and of the total delivered production.

FIG.2

EP 4 390 813 A1

**Description**

TECHNICAL FIELD OF THE INVENTION

The present invention concerns a method for determining the production based availability of a wind farm. The present invention also concerns an associated computer program product. The present invention also relates to an associated readable information carrier.

BACKGROUND OF THE INVENTION

Preparing for the energy transition is one of the major concerns nowadays. In particular, in 2019 in France, the share of renewable energies in the production of electricity was around 20%. Among them, the share of wind power amounted to 6% and was exclusively implemented on land. From 2022, new offshore wind farm projects are emerging on the coasts and raise new questions for the offshore wind industry to meet the objectives of increasing the share of renewable energies.

The production of a wind farm on land depends mainly on its availability and the wind speed at the origin of the energy generated by the system. Its availability depends both on the intrinsic reliability of its equipment but also on its maintenance policy. In the case of an offshore wind farm, environmental constraints are added, which have an impact on the reliability of the system, which is in a more constrained environment (e.g. component fatigue), but also on maintenance, which must adapt its logistical means of access to the production facilities (e.g. Crew Transfer Vessel, Service Operational Vessel, helicopter, etc.), its maintenance policy (e.g. opportunistic preventive maintenance) and also its teams of technicians and operational engineers (e.g. seasickness) according to the sea state. Thus, weather conditions have a significant impact on availability but also on operational expenditure (OPEX) and the rigorous consideration of these data and their impacts in a reliability model is crucial to obtain relevant results, and hope to optimize the LCOE (Levelised Cost Of Energy).

To this end, operation and maintenance (O&M) models have been developed to help in the decision making process of the best O&M strategy to be applied in order to obtain an optimum between the Operating Expenditure (OPEX) and the Production Based Availability (PBA) for a given farm.

An O&M model allows a temporal simulation of the life of a wind farm, by modeling the architecture of the system (power curve, redundancy...) and by simulating its behavior via the Monte Carlo simulation method, which takes into account the occurrences of statistical and probabilistic events affecting the production such as:

- inspections and preventive maintenance: carried out in a calendar manner and defined in relation to the design of the installations, but whose starting conditions may depend on the operational environment,

- breakdowns and production stoppages: occurring in a random or conditioned manner depending on the failure rates of the different equipment of the wind farm and its operating ranges, and

- corrective maintenance: carried out in response to breakdowns and production stoppages and using the resources of the O&M strategy such as operational personnel, logistics resources or spare parts, which may also depend on the operational environment.

The current software on the market enabling to determine the PBA of a wind farm largely simplify the calculation of the expected production. Indeed, such software only convert the wind conditions at each simulated time using a generic power curve of the turbines of the farm.

These strong simplifications in the determination of the expected production at the farm scale do not allow for an accurate and a rigorous estimation of the production based availability.

SUMMARY OF THE INVENTION

There exists a need for a method enabling to evaluate in a more precise way the production based availability of a wind farm, and especially of an offshore windfarm.

To this end, the invention relates to a method for determining the production based availability of a wind farm comprising wind turbines, the method comprising the following steps which are computer-implemented:

- obtaining wind farm data relative to features of the wind farm,

- obtaining past meteorological data relative to an environment of the wind farm,

- obtaining strategy data relative to operation and maintenance resources to carry out an action on the wind turbine(s) of the wind farm,

- obtaining systematic losses data relative to each turbine of the wind farm,

- determining time series for the wind farm on the basis of the wind farm data, of the meteorological data and of the systematic losses data, the time series extending over a given time period divided in timesteps, the time series comprising at least an expected production for each wind turbine and a total expected production for the whole wind farm at each timestep of the given time period, the expected productions taking into account systematic losses relative to each wind turbine ,

- determining the availability of each wind turbine at each timestep of the time series on the basis of the wind farm data, of the strategy data and of the meteorological data,

- determining a total delivered production for the whole windfarm on the basis of the expected production of each wind turbine at each timestep and of the determined availability of each wind turbine at each timestep of the time series, and

- determining the production based availability of the whole wind farm at each timestep of the given time period on the basis of the total expected production and of the total delivered production determined for the whole wind farm at each timestep of the given time period.

The method according to the invention may comprise one or more of the following features considered alone or in any combination that is technically possible:

- the systematic losses data relate at least to machine interactions losses which are losses relative to interactions between wind turbines of the wind farm;
- the machine interaction losses comprise at least losses relative to the wake effect and/or losses relative to the blockage effect;
- the systematic losses data relate at least to losses due to taking into account the variations of the power of the wind turbines as a function of the air density;
- the systematic losses data relate at least to losses due to the cut-out wind speed with hysteresis of the wind turbines , the cut-out wind speed with hysteresis being the wind speed at which the wind turbine stops its operation when the wind speed exceeds a speed threshold taking into account the recut-in wind speed and the averaging time used to measure cut-out and recut-in wind speeds;
- the systematic losses data relate at least to losses due to a power curtailment of the wind turbines, preferably for the protection of bird species and/or for network constraints;
- the step of determining the availability of each wind turbine comprises for each timestep of the given time period:

  - determining, for each wind turbine, any eventual non-productive events on the basis of the wind farm data, of the strategy data and of the meteorological data, a non-productive event being any event affecting the production of a wind turbine and for which an operation and/or maintenance action is requested,
  - at least in the case where a non-productive event has been determined, determining, the accessibility of the wind farm for an operation and/or a maintenance action on the basis of the wind farm data and of the meteorological data, and
  - determining the availability of each wind turbine on the basis of the determined eventual non-productive events and of the accessibility of the wind farm at the considered timestep;

- the wind farm is an offshore wind farm, the accessibility of the wind farm at each timestep being determined on the basis of motion parameters, the motion parameters being determined on the basis of the wind farm data and of the meteorological data, the motion parameters being parameters quantifying the motions of at least an element, such as the nacelle or the floater, of a floating wind turbine of the wind farm and/or the motions of a vessel aiming to reach said floating wind turbine to perform operation and/or maintenance actions on said floating wind turbine;
- the meteorological data comprise wind data and sea data when the wind farm is an offshore wind farm, the sea data being relative to waves data and/or sea current;
- the strategy data comprise data relative to staffing and logistic means and data relative to the repair base and spare part;
- the wind farm data comprise at least one of the following elements:

  - data relative to the wind turbines,
  - data relative to wind farm design,
  - data relative to failure rates of the wind turbines,
  - data relative to scheduled maintenance and inspection,
  - data relative to safety test,
  - data relative to spare part management, and
  - data relative to curative maintenance;

- the determined production based availability of the wind farm and/or of the expected production of each wind turbine at each timestep, is/are intended to be used for setting up operation and maintenance resources for carrying out operation and maintenance actions on the wind farm;
- the wind farm data and/or the meteorological data comprise at least one piece of data obtained through a measurement performed by a sensor.

The invention also relates to a computer program product comprising a readable information carrier having stored thereon a computer program comprising program instructions, the computer program being loadable onto a data processing unit and causing a method as previously described to be carried out when the computer program is carried out on the data processing unit.

The invention also relates to a readable information carrier on which is stored a computer program product as previously described.

BRIEF DESCRIPTION OF THE DRAWINGS

The invention will be easier to understand in view of the following description, provided solely as an example and with reference to the appended drawings in which:

- Figure 1 is a schematic view of an example of a wind farm on land,
- Figure 2 is a schematic view of an example of an offshore wind farm with one floating wind turbine in failure, a vessel being on its way for repairing the broken turbine,
- Figure 3 is a schematic view of an example of a computer for implementing a method for determining the production based availability of a wind farm, and
- Figure 4 is a flowchart of an example of implementation of a method for determining the production based availability of a wind farm.

DETAILED DESCRIPTION OF SOME EMBODIMENTS

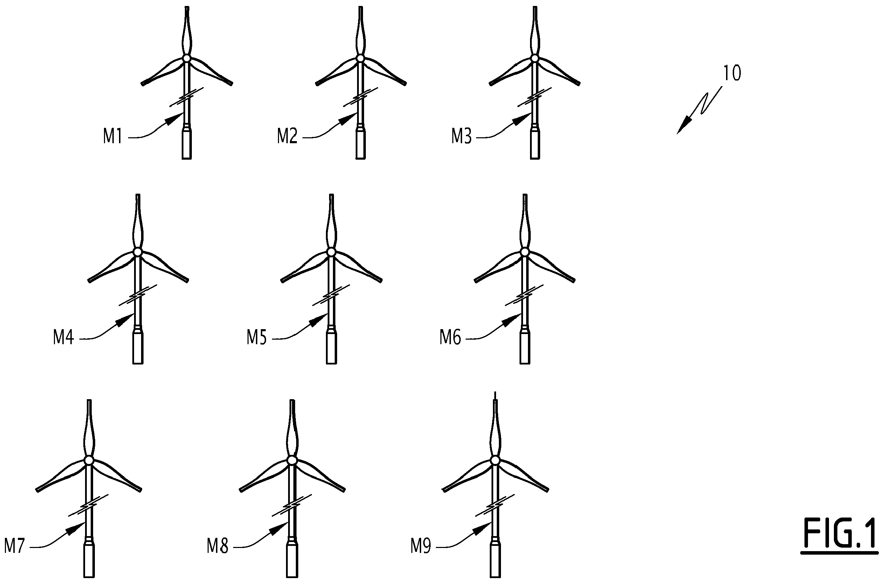

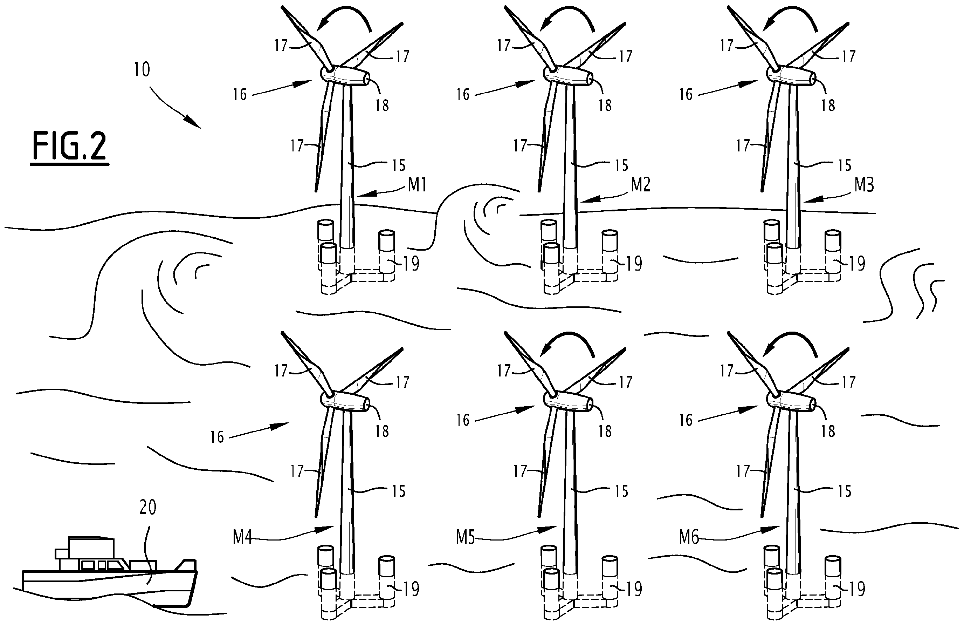

An example of a wind farm 10 is illustrated on figures 1 and 2. A wind farm or wind park, also called a wind power station or wind power plant, is a group of wind turbines in the same location used to produce electricity. Wind farms vary in size from a small number of turbines to several hundred wind turbines covering an extensive area.

The wind farm 10 comprises a plurality of wind turbines $M_i$.

In the example of figure 1, the wind farm 10 is a wind farm on land, comprising nine turbines M1 to M9. However, the invention also applies to wind farms having less (at least two) or more turbines $M_i$, even to large wind farms which are wind farms having at least 20 turbines.

In a variant, the wind farm 10 is an offshore wind farm comprising several wind turbine $M_i$, such as floating wind turbines $M_i$. A floating wind turbine is an offshore wind turbine mounted on a floating structure that allows the turbine to generate electricity in water depths particularly where fixed-foundation turbines are not feasible. In a variant, the wind turbines $M_i$ of the offshore wind farm 10 are fixed-foundation turbines.

In the example of figure 2, the offshore wind farm 10 comprises six floating wind turbines M1 to M6. However, the invention also applies to wind farms having less (at least two) or more floating wind turbines $M_i$.

Typically, as illustrated for two floating wind turbines $M_i$ of figure 2, each floating wind turbine $M_i$ comprises a mast 15, a rotor 16 made of blades 17 (generally three), a nacelle 18 and a floater 19.

In particular, on the example of figure 2, one of the floating wind turbine $M_i$ (bottom left) has a turbine failure so that the turbine $M_i$ does not work. This has an impact on the production based availability of the wind farm 10. Consequently, a vessel 20 with a maintenance team is sent to repair the broken turbine $M_i$.

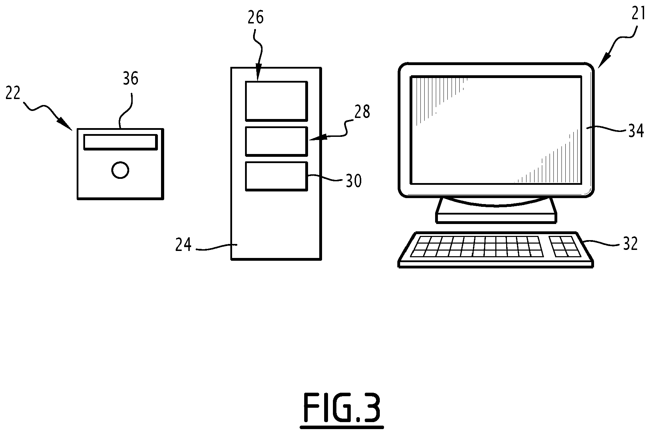

A calculator 21 is illustrated on figure 3.

The calculator 21 is preferably a computer.

More generally, the calculator 21 is a computer or computing system, or similar electronic computing device adapted to manipulate and/or transform data represented as physical, such as electronic, quantities within the computing system's registers and/or memories into other data similarly represented as physical quantities within the computing system's memories, registers or other such information storage, transmission or display devices.

The calculator 21 interacts with the computer program product 22.

As illustrated on figure 2, the calculator 21 comprises a processor 24 comprising a data processing unit 26, memories 28 and a reader 30 for information media. In the example illustrated on figure 2, the calculator 21 comprises a human machine interface 32, such as a keyboard, and a display 34.

The computer program product 22 comprises an information medium 36.

The information medium 36 is a medium readable by the calculator 21, usually by the data processing unit 26. The readable information medium 36 is a medium suitable for storing electronic instructions and capable of being coupled to a computer system bus.

By way of example, the information medium 36 is a USB key, a floppy disk or flexible disk (of the English name "Floppy disc"), an optical disk, a CD-ROM, a magneto-optical disk, a ROM memory, a memory RAM, EPROM memory, EEPROM memory, magnetic card or optical card.

On the information medium 36 is stored the computer program 22 comprising program instructions.

The computer program 22 is loadable on the data processing unit 26 and is adapted to entail the implementation of a method for determining the production based availability of a wind farm 10, when the computer program 22 is loaded on the processing unit 26 of the calculator 21.

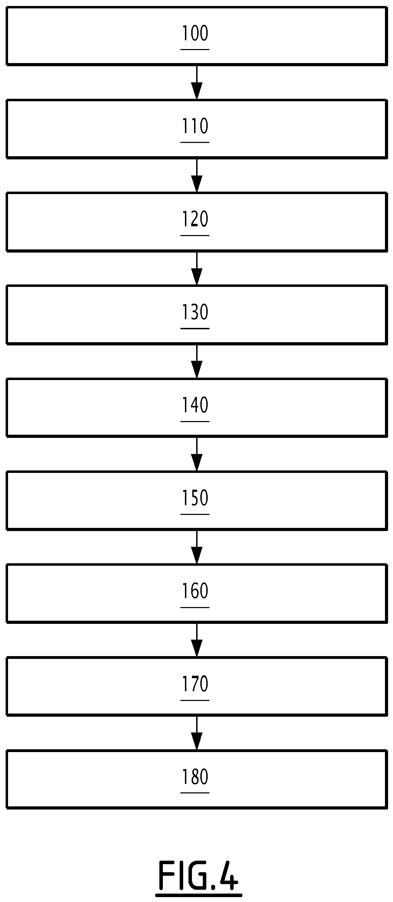

Operation of the calculator 21 will now be described with reference to figure 4, which diagrammatically illustrates an example of implementation of a method for determining the production availability of an offshore wind farm 10.

The determination method comprises a step 100 for obtaining wind farm data relative to features of the offshore wind farm 10. The obtaining step 100 is, for example, implemented by the calculator 21 interacting with the computer program product 22, that is to say is computer-implemented.

Preferably, the wind farm data comprise at least one of the following elements:

- data relative to the wind turbines $M_i$ (dimensions, numbers),
- data relative to wind farm design (relative location of the wind turbines $M_i$),
- data relative to failure rates of the wind turbines M;,
- data relative to scheduled maintenance and inspection (frequency, duration, repair team, logistics...),
- data relative to safety test (frequency, duration, repair team, logistics...),
- data relative to spare part management (initial stock, procurement time, ...), and

- data relative to curative maintenance (repair team, conditions, logistics...).

In an example, the wind farm data comprise at least one piece of data obtained through a measurement performed by a sensor on a wind turbine $M_i$. The piece of data is for example the failure rates of the wind turbines $M_i$.

The determination method comprises a step 110 for obtaining strategy data relative to operation and maintenance resources to carry out an action on the wind turbines $M_i$ of the wind farm 10. The obtaining step 110 is, for example, implemented by the calculator 21 interacting with the computer program product 22, that is to say is computer-implemented.

The action is for example an inspection of the wind turbine $M_i$ or a maintenance performed on the wind turbine $M_i$ or a repair of the wind turbine $M_i$.

Preferably, the strategy data comprise data relative to staffing and logistic means and data relative to the repair base and spare part.

For example, the strategy data comprises the location of the operation center, a number of vessels, a speed of the vessels, a size of the vessels, a number of technicians, or the technician's working hours or the storage and supply of spare parts.

The determination method comprises a step 120 for obtaining past meteorological data relative to the environment of the wind farm 10. The obtaining step 120 is, for example, implemented by the calculator 21 interacting with the computer program product 22, that is to say is computer-implemented.

In an example, the meteorological data are data obtained through measurements performed by at least one sensor (ex: anemometer, thermometer, hygrometer, waves sensor...).

Preferably, the meteorological data comprise wind data and sea data when the wind farm 10 is an offshore wind farm. The sea data are relative to waves data and/or sea current.

The given time period T of the past meteorological data is for example several months, or 1 or several years. The meteorological data are typically obtained for time step of the given time period T. The time step is for example 10 minutes or one or several hours.

The determination method comprises a step 130 for obtaining systematic losses data relative to each turbine $M_i$ of the wind farm 10. The obtention step 130 is, for example, implemented by the calculator 21 interacting with the computer program product 22, that is to say is computer-implemented.

The systematic losses are losses used to calculate the expected production of the wind farm 10. The systematic losses are different from the losses relative to failures and maintenance operations carried out on the windfarm 10. Such losses relative to failures and maintenance operations are used, through the availability of the wind farm 10, to calculate the delivered production of the wind farm 1 as this will be explained later in the description.

The systematic losses are, for example, communicated by an operator. In a variant, the systematic losses are calculated on the basis of wind farm data and meteorological data.

In an example of embodiment, the systematic losses data relate at least to machine interactions losses which are losses relative to interactions between wind turbines $M_i$ of the wind farm 10. For example, such data are calculated on the basis of wind farm data and meteorological data.

For example, the machine interaction losses comprise at least losses relative to the wake effect and/or losses relative to the blockage effect. The wake effect is the aggregated influence on the energy of the wind farm 10, which results from the changes in wind speed caused by the impact of the wind turbines $M_i$ on each other. The blockage effect is the aggregated influence on the energy of the wind farm 10 of the wind compression on the first line of wind turbines $M_i$ reached by a wind front.

In addition or in a variant, the systematic losses data relate at least to losses due to taking into account the variations of the power of the wind turbines $M_i$ as a function of the air density.

For example, the air density for timesteps $\Delta t$ of a time period T is determined on the basis of pressure data and of temperature data relative to the environment of the windfarm.

In addition or in a variant, the systematic losses data relate at least to losses due to the cut-out wind speed with hysteresis of the wind turbines $M_i$. The cut-out wind speed with hysteresis being the wind speed at which the wind turbine $M_i$ stops its operation when the wind speed exceeds a speed threshold taking into account the recut-in wind speed and the averaging time used to measure cut-out and recut-in wind speeds. For example, such data are communicated by the operator (manufacturer data).

In addition or in a variant, the systematic losses data relate at least to losses due to a power curtailment of the wind turbines $M_i$; preferably for the protection of bird species and/or for network constraints. For example, such data are communicated by the operator.

The determination method comprises a step 140 for determining time series for the windfarm on the basis of the wind farm data, of the meteorological data and of the systematic losses data. The determination step 140 is, for example, implemented by the calculator 21 interacting with the computer program product 22, that is to say is computer-implemented.

The time series extend over a given time period T divided in timesteps $\Delta t$. The given time period T is for example one or several years. The timesteps $\Delta t$ are for example 10 minutes or one or several hours.

The time series comprise at least an expected production $E_{exp}^{M_i}$ (in terms of energy) for each wind

turbine $M_i$ and a total expected production $E_{exp}^{tot}$ for the whole wind farm 10 at each timestep $\Delta t$ of the given time period T.

More precisely, a time series is preferably specific to a turbine $M_i$. Hence, for a number N of turbines $M_i$, there is at least N time series (with in addition a time series corresponding to the total expected production $E_{exp}^{tot}$ at each timestep).

The determination method comprises a step 150 of determining the availability $A^{M_i}$ of each wind turbine $M_i$ at each timestep $\Delta t$ of the time series on the basis of the wind farm data, of the strategy data and of the meteorological data. The determination step 150 is, for example, implemented by the calculator 21 interacting with the computer program product 22, that is to say is computer-implemented.

In an example of implementation, the step 150 of determining the availability $A^{M_i}$ of each wind turbine $M_i$ comprises for each timestep $\Delta t$ of the given time period T:

- determining, for each wind turbine $M_i$, any eventual non-productive events on the basis of the wind farm data, of the strategy data and of the meteorological data, a non-productive event being any event affecting the production of a wind turbine $M_i$ and for which an operation and/or maintenance action is requested,
- at least in the case where a non-productive event has been determined, determining, the accessibility of the wind farm 10 for an operation and/or a maintenance action (at the next time step) on the basis of the wind farm data and of the meteorological data, and
- determining the availability $A^{M_i}$ of each wind turbine $M_i$ on the basis of the determined eventual non-productive events and of the accessibility of the wind farm 10 at the considered timestep $\Delta t$.

For example, at least a non-productive event is one of the following events:

- inspection and preventive maintenances, which are for example carried out in a scheduled manner and defined in relation to the design of the facilities, but whose start-up conditions may depend on the operational environment,
- failure and production shutdowns, which are for example occurring in a random or conditioned manner depending on the failure rates of the different equipment of the wind farm 10 and its operating ranges, and
- curative maintenance, which are for example carried out in reaction to failures and production stoppages and implementing the means of the operation and maintenance strategy such as operational personnel, logistical means or spare parts that may also depend on the operational environment.

The action aims at ending the non-productive event. The wind farm 10 is considered accessible when an operation and/or a maintenance action can be carried out on the wind farm 10 (it is possible for an operation and maintenance team to reach a considered $M_i$ and performed actions on this turbine $M_i$). The wind farm 10 is considered inaccessible otherwise. It should be noted that the term "accessibility" is different from the term "production availability" used in the description. The production based availability refers to the production of the wind farm 10 over a given time period T even if at some time the wind farm 10 is considered inaccessible. Hence, the determined accessibility of the wind farm 10 for the considered time step(s) affects the production based availability (decrease or not of the production availability depending on the accessibility of the wind farm 10).

For example, when the wind farm 10 is an offshore wind farm, the accessibility of the wind farm 10 at each timestep $\Delta t$ is preferably determined on the basis of motion parameters. The motion parameters are parameters determined on the basis of the wind farm data and of the meteorological data.

The motion parameters are parameters quantifying the motions of at least an element, such as the nacelle 18 or the floater 19, of a floating wind turbine $M_i$ of the wind farm 10 and/or the motions of a vessel 20 aiming to reach said floating wind turbine $M_i$ to perform operation and/or maintenance actions on said floating wind turbine $M_i$.

For example, the motion parameters comprise at least one of the following parameters:

- a parameter relative to the displacement of the nacelle 18 of a floating wind turbine $M_i$ (with respect to a nominal position),
- a parameter relative to the acceleration of the nacelle 18 of a floating wind turbine $M_i$,
- a parameter relative to the displacement of the floater 19 (on one or on several points of the floater 19) of a floating wind turbine $M_i$ (with respect to a nominal position),
- a parameter relative to the acceleration of the floater 19 (on one or on several points of the floater 19) of a floating wind turbine $M_i$,
- a parameter relative to the relative displacement of the floater 19 (on one or on several points of the floater 19) of a floating wind turbine $M_i$ with respect to a given vessel 20 aiming to reach said floating wind turbine $M_i$,
- a parameter relative to the relative acceleration of the floater 19 (on one or on several points of the floater 19) of a floating wind turbine $M_i$ with respect to a given vessel 20 aiming to reach said floating

wind turbine $M_i$; and

- a parameter relative to a slowdown of the cruising speed of a given vessel 20 aiming to reach a floating wind turbine $M_i$.

In an example, the motion parameters are determined on the basis of an hydrodynamic model as a function of the wind farm data and of the meteorological data.

The hydrodynamic model is for example a software in the frequency domain (potential calculation) if the response to the swell is preponderant. In another example, the hydrodynamic model is a software in the time domain (coupled aero-hydro-servo-elastic calculation) if the coupled effects of wind and waves are important.

Preferably, the calculator 21 has access to a database in which predetermined meteorological conditions are associated to predetermined motion parameters for the offshore wind farm 10. The association was obtained using the hydrodynamic model. The determination step 150 comprises comparing the meteorological data with the predetermined meteorological conditions of the database in order to obtain the predetermined meteorological conditions the closest from the meteorological data, and determining, as motion parameters, the predetermined motion parameters corresponding to the closest predetermined meteorological conditions.

In this example, a large number of hydrodynamic simulations were pre-calculated by the hydrodynamic model for all the meteorological conditions of a site (waves, current and wind), with a given design of floating wind turbine $M_i$ (for example a model of the turbine $M_i$, the floater 19 and its mooring system); and a given transfer vessel. These calculations allow to build a response matrix of the system according to all the weather conditions that can be encountered on site.

In another example, the motion parameters are determined directly by the hydrodynamic model on the basis of the wind farm data and the meteorological data. In this case, a calculation is made for each considered time step.

Preferably, the motion parameters are determined only for each time step of the given time period T for which a non-productive event has been determined at the preceding time step (and not for the other time steps), which enables reducing calculation times. In a variant, the motion parameters are determined for each time step of the given time period T.

The accessibility of the offshore wind farm 10 is, for example, determined by evaluating whether the motions parameters for the considered time step reach predetermined accessibility criteria (operational envelope for example). If so the wind farm 10 is considered accessible for an operation and/or a maintenance action at the next time step. Otherwise the wind farm 10 is considered inaccessible for said operation and/or maintenance action at the next time step. Hence, at each occurrence of a random event that requires technician access (for example to the floater 19 or the nacelle 18), the acceptability of the intervention with respect to motion and acceleration is verified by comparing the results of the hydrodynamic simulations with the accessibility criteria.

The determination method comprises a step 160 of determining a total delivered production $E_{del}^{tot}$ for the whole windfarm on the basis of the expected production $E_{exp}^{M_i}$ of each wind turbine $M_i$ at each timestep $\Delta t$ and of the determined availability $A^{M_i}$ of each wind turbine $M_i$ at each timestep $\Delta t$ of the time series. The determination step 160 is, for example, implemented by the calculator 21 interacting with the computer program product 22, that is to say is computer-implemented.

Preferably, the total delivered production $E_{del}^{tot}$ at each timestep $\Delta t$ is the sum of the expected production $E_{exp}^{M_i}$ of each available wind turbine $M_i$ at said timestep $\Delta t$.

For example, regarding figure 1, if only the wind turbine M2 is unavailable at a timestep, the total delivered production $E_{del}^{tot}$ at said timestep is the sum of the expected production $E_{exp}^{M_i}$ of the wind turbines M1 and M3 to M9 (and not of the turbine M2).

The determination method comprises a step 170 of determining the production based availability PBA of the whole wind farm 10 at each timestep $\Delta t$ of the given time period T on the basis of the total expected production $E_{exp}^{tot}$ and of the total delivered production $E_{del}^{tot}$ determined for the whole wind farm 10 at each timestep $\Delta t$ of the given time period T. The determination step 170 is, for example, implemented by the calculator 21 interacting with the computer program product 22, that is to say is computer-implemented.

In particular, the production based availability PBA is the ratio of the total delivered production $E_{del}^{tot}$ divided by the total expected production $E_{exp}^{tot}$.

In an example of implementation, all the steps 140 to 170 of the determination method are carried out using an operation and maintenance model. Typically, the operation and maintenance model implements a Monte-Carlo simulation. In particular, the operation and maintenance model allows the temporal determination of the performances of the wind farm 10, by modeling the architecture of the system (power curve, redundancy...) and by simulating its performances via the Monte Carlo simulation method, which takes into account the occurrences of statistical and probabilistic events affecting production and the systematic losses of the turbines.

Optionally, the determination method comprises a step 180 of setting up operation and maintenance resources for carrying out operation and maintenance actions on the wind farm 10 as a function of the determined production based availability PBA of the wind farm 10 and/or of the expected production $E_{exp}^{M_i}$ of each wind turbine $M_i$ at each timestep $\Delta t$.

The setting up step 180 comprises for example selecting a maintenance team, a type and/or number of operation and maintenance vessels, or other elements relative to the strategy data as a function of the determined production based availability PBA. For example, the method is repeated for different strategy data, and the strategy data leading to an optimized production based availability PBA are used to set up the operation and maintenance resources.

Hence, the above method by taking into account in the O&M model systematic losses relative to the turbines of the wind farm, enables a better estimation of the expected production of the turbines at each instant of the simulation. This enables a better estimation of the delivered production, and consequently of the production based availability. On the contrary, the state of the art systematically omits all aerodynamic considerations such as the wake effect or the blocking effect which can have a significant impact on the expected production at the farm scale. In addition, all the meteorological considerations such as the correction of the power curve according to the density of the air of the site are also omitted. Moreover, the basic consideration of the power curve that is currently proposed in the state of the art also omits the consideration of the cut-out wind speeds with hysteresis and any special operating measures such as power curtailments of wind turbines set up for the protection of bird species, for network constraints or others.

It should be noted that this invention also opens the perspective of an optimized planning of preventive maintenance operations or prioritization of curative maintenance operations according to the expected production of each wind turbine in its own aerodynamic context varying according to the weather conditions.

The person skilled in the art will understand that the embodiments and variants described above can be combined provided that they are technically compatible. They apply to both a wind farm on land and an offshore windfarm. In addition, the order of the steps of the method is given as an example, and the order of some steps is interchangeable (for example steps 100, 110, 120 and 130).

**Claims**

1. A method for determining the production based availability (PBA) of a wind farm (10) comprising wind turbines ($M_i$), the method comprising the following steps which are computer-implemented:

   - obtaining wind farm data relative to features of the wind farm (10),
   - obtaining past meteorological data relative to an environment of the wind farm (10),
   - obtaining strategy data relative to operation and maintenance resources to carry out an action on the wind turbine(s) ($M_i$) of the wind farm (10),
   - obtaining systematic losses data relative to each turbine ($M_i$) of the wind farm (10),
   - determining time series for the wind farm (10) on the basis of the wind farm data, of the meteorological data and of the systematic losses data, the time series extending over a given time period (T) divided in timesteps ($\Delta t$), the time series comprising at least an expected production $\left(E_{exp}^{M_i}\right)$ for each wind turbine ($M_i$) and a total expected production $\left(E_{exp}^{tot}\right)$ for the whole wind farm (10) at each timestep ($\Delta t$) of the given time period (T), the expected productions $\left(E_{exp}^{M_i};\ E_{exp}^{tot}\right)$ taking into account systematic losses relative to each wind turbine ($M_i$),
   - determining the availability ($A^{M_i}$) of each wind turbine ($M_i$) at each timestep ($\Delta t$) of the time series on the basis of the wind farm data, of the strategy data and of the meteorological data,
   - determining a total delivered production $\left(E_{del}^{tot}\right)$ for the whole windfarm on the basis of the expected production $\left(E_{exp}^{M_i}\right)$ of each wind turbine ($M_i$) at each timestep ($\Delta t$) and of the determined availability ($A^{M_i}$) of each wind turbine ($M_i$) at each timestep ($\Delta t$) of the time series, and
   - determining the production based availability (PBA) of the whole wind farm (10) at each timestep ($\Delta t$) of the given time period (T) on the basis of the total expected production $\left(E_{exp}^{tot}\right)$ and of the total delivered production $\left(E_{del}^{tot}\right)$ determined for the whole wind farm (10) at each timestep ($\Delta t$) of the given time period (T).

2. A method according to claim 1, wherein the systematic losses data relate at least to machine interactions losses which are losses relative to interactions between wind turbines ($M_i$) of the wind farm (10).

3. A method according to claim 2, wherein the machine interaction losses comprise at least losses relative to the wake effect and/or losses relative to the blockage effect.

4. A method according to any one of claims 1 to 3, wherein the systematic losses data relate at least to losses due to taking into account the variations of the power of the wind turbines ($M_i$) as a function of the air density.

5. A method according to any one of claims 1 to 4, wherein the systematic losses data relate at least to losses due to the cut-out wind speed with hysteresis of the wind turbines ($M_i$), the cut-out wind speed with hysteresis being the wind speed at which the wind turbine ($M_i$) stops its operation when the wind speed exceeds a speed threshold taking into account the recut-in wind speed and the averaging time used to measure cut-out and recut-in wind speeds.

6. A method according to any one of claims 1 to 5, wherein the systematic losses data relate at least to losses due to a power curtailment of the wind turbines ($M_i$), preferably for the protection of bird species and/or for network constraints.

7. A method according to any one of claims 1 to 6, wherein the step of determining the availability ($A^{M_i}$) of each wind turbine ($M_i$) comprises for each timestep ($\Delta t$) of the given time period (T):

   - determining, for each wind turbine ($M_i$), any eventual non-productive events on the basis of the wind farm data, of the strategy data and of the meteorological data, a non-productive event being any event affecting the production of a wind turbine ($M_i$) and for which an operation and/or maintenance action is requested,
   - at least in the case where a non-productive event has been determined, determining, the accessibility of the wind farm (10) for an operation and/or a maintenance action on the basis of the wind farm data and of the meteorological data, and
   - determining the availability ($A^{M_i}$) of each wind turbine ($M_i$) on the basis of the determined eventual non-productive events and of the accessibility of the wind farm (10) at the considered timestep ($\Delta t$).

8. A method according to claim 7, wherein the wind farm (10) is an offshore wind farm, the accessibility of the wind farm (10) at each timestep ($\Delta t$) being determined on the basis of motion parameters, the motion parameters being determined on the basis of the wind farm data and of the meteorological data, the motion parameters being parameters quantifying the motions of at least an element, such as the nacelle (18) or the floater (19), of a floating wind turbine ($M_i$) of the wind farm (10) and/or the motions of a vessel (20) aiming to reach said floating wind turbine ($M_i$) to perform operation and/or maintenance actions on said floating wind turbine ($M_i$).

9. A method according to any one of claims 1 to 8, wherein the meteorological data comprise wind data and sea data when the wind farm (10) is an offshore wind farm, the sea data being relative to waves data and/or sea current.

10. A method according to any one of claims 1 to 9, wherein the strategy data comprise data relative to staffing and logistic means and data relative to the repair base and spare part.

11. A method according to any one of claims 1 to 10, wherein the wind farm data comprise at least one of the following elements:

   - data relative to the wind turbines ($M_i$),
   - data relative to wind farm design,
   - data relative to failure rates of the wind turbines ($M_i$),
   - data relative to scheduled maintenance and inspection,
   - data relative to safety test,
   - data relative to spare part management, and
   - data relative to curative maintenance.

12. A method according to any one of claims 1 to 11, wherein the determined production based availability (PBA) of the wind farm (10) and/or of the expected production $\left(E_{exp}^{M_i}\right)$ of each wind turbine ($M_i$) at each timestep ($\Delta t$), is/are intended to be used for setting up operation and maintenance resources for carrying out operation and maintenance actions on the wind farm (10).

13. A method according to any one of claims 1 to 12, wherein the wind farm data and/or the meteorological data comprise at least one piece of data obtained through a measurement performed by a sensor.

14. A computer program product comprising a readable information carrier having stored thereon a computer program comprising program instructions, the computer program being loadable onto a data processing unit and causing a method according to any one of claims 1 to 13 to be carried out when the computer program is carried out on the data processing unit.

FIG.1

FIG.2

EP 4 390 813 A1

## FIG.3

FIG.4

Europäisches
Patentamt

European
Patent Office

Office européen
des brevets

# EUROPEAN SEARCH REPORT

**Application Number**

EP 22 30 6975

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ERGUIDO A ET AL: "A dynamic opportunistic maintenance model to maximize energy-based availability while reducing the life cycle cost of wind farms", RENEWABLE ENERGY, PERGAMON PRESS, OXFORD, GB, vol. 114, 6 July 2017 (2017-07-06), pages 843-856, XP085189626, ISSN: 0960-1481, DOI: 10.1016/J.RENENE.2017.07.017 | 1-6,9-14 | INV.<br>G06Q10/20<br>G06Q50/06<br>G06Q10/04 |
| Y | * abstract *<br>* Sections 1-4 *<br>* figures 2-3 * | 7,8 | |
| | ----- | | |
| X | ASGARPOUR MASOUD ET AL: "O&M modeling of offshore wind farms - State of the art and future developments", 2016 ANNUAL RELIABILITY AND MAINTAINABILITY SYMPOSIUM (RAMS), IEEE, 25 January 2016 (2016-01-25), pages 1-6, XP032889509, DOI: 10.1109/RAMS.2016.7448057 [retrieved on 2016-04-05] * 2.2 O&M Strategy optimizers * * 3.4.2. Production based availability * | 1-6,9-14 | |
| | ----- | | **TECHNICAL FIELDS SEARCHED (IPC)**<br><br>G06Q |
| Y | SCHEU MATTI ET AL: "Human exposure to motion during maintenance on floating offshore wind turbines", OCEAN ENGINEERING, PERGAMON, AMSTERDAM, NL, vol. 165, 25 July 2018 (2018-07-25), pages 293-306, XP085444644, ISSN: 0029-8018, DOI: 10.1016/J.OCEANENG.2018.07.016 * abstract * * 4.1 Accessibility * | 7,8 | |
| | -----<br><div align="center">-/--</div> | | |

The present search report has been drawn up for all claims

| Place of search | Date of completion of the search | Examiner |
|---|---|---|
| Munich | 9 May 2023 | Aguilar, José María |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.....................................................................................
& : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

EP 22 30 6975

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DINWOODIE IAIN ET AL: "Reference Cases for Verification of Operation and Maintenance Simulation Models for Offshore Wind Farms", WIND ENGINEERING., vol. 39, no. 1, 1 February 2015 (2015-02-01), pages 1-14, XP093044841, GB ISSN: 0309-524X, DOI: 10.1260/0309-524X.39.1.1 * 2.1. Verification process 2.2. Description of models considered for verification * * abstract * | 1-14 | |
| A | "Wind turbines - Part 26-2: Production-based availability for wind turbines", IEC TS 61400-26-2:2014, IEC, 3, RUE DE VAREMBÉ, PO BOX 131, CH-1211 GENEVA 20, SWITZERLAND, 4 June 2014 (2014-06-04), pages 1-47, XP082006365, [retrieved on 2014-06-04] * the whole document * | 1-14 | |

TECHNICAL FIELDS
SEARCHED (IPC)

-/--

The present search report has been drawn up for all claims

| Place of search | Date of completion of the search | Examiner |
|---|---|---|
| Munich | 9 May 2023 | Aguilar, José María |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

**EP 22 30 6975**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Anonymous: "DNV GL WHITE PAPER Definitions of Availability Terms for the Wind Industry", , 9 August 2017 (2017-08-09), XP093044964, Retrieved from the Internet: URL:https://www.ourenergypolicy.org/wp-content/uploads/2017/08/Definitions-of-availability-terms-for-the-wind-industry-white-paper-09-08-2017.pdf [retrieved on 2023-05-08] * 2.3.1 Time-based versus Production-based availability * | 1-14 | |

TECHNICAL FIELDS
SEARCHED      (IPC)

The present search report has been drawn up for all claims

| Place of search | Date of completion of the search | Examiner |
|---|---|---|
| Munich | 9 May 2023 | Aguilar, José María |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..............................................................................
& : member of the same patent family, corresponding document

EPO FORM 1503 03.82 (P04C01)